# EUROPEAN PATENT APPLICATION

(11) **EP 1 705 773 A1**
(43) Date of publication of application: **27.09.2006**
(21) Application number: 05771101.2
(22) Date of filing: 20.07.2005
(51) Int. Cl.: H02J 7/04, H01M 10/44

(54) **BATTERY CHARGING METHOD**

(30) Priority: 19.07.2004 KR 55950000005
(71) Applicant: Samsung Electronics Co., Ltd, Suwon-si, Gyeonggi-do 442-742 (KR)
(72) Inventor: LEE, Yong-Jai, Sunwon-si, Gyeonggi-do (KR); BENDANA-ARAGON, Julian Jose, Bo. Bolonia, Apart. Postal 3140, Managua (NI)
(74) Representative: Read, Matthew Charles
(86) International application number: PCT/NI2005/000001
(87) International publication number: WO 2006/028363

(57) **Abstract**

A method for charging a battery, including (a) stopping the charging of the battery after the battery is charged for a predetermined unit charging time; (b) measuring a voltage charged in the battery after a lapse of a stabilizing time measured from the stopping of the charging of the battery in (a); (c) determining whether a voltage difference between the currently measured voltage of the battery and a just previously measured voltage thereof is within a predetermined reference value while (a) and (b) are repeated; and (d) stopping the charging of the battery after (a), (b), (c) are repeated until the voltage difference is within the reference value by a predetermined number of times. Thus the present invention provides a method and a system for charging a battery, in which the voltage actually charged in the battery is measured while the battery is charged, so that the battery is stably and fully charged.

## Description

### Field of the invention

The present invention relates to a method and a system for charging a battery, and more particularly, to a method and a system for stably and fully charging a battery.

### Background to the invention

A portable electronic appliance including a portable computer such as a notebook personal computer, a personal digital assistant (PDA), a handheld personal computer, or the like; a portable display apparatus; a camcorder; etc. employs a battery as a power supplying system while being carried. Here, a rechargeable secondary battery is generally used as the battery, wherein the battery is recharged with power supplied through an adapter.

Technology related to the battery has become increasingly important because the battery is essential to the portable electronic appliance when the portable electronic appliance is used while being carried, or otherwise used remotely by a user.

One important technological aspect related to the battery is the ability to prevent the battery from overcharging. In the technology of preventing the battery from overcharging, constant current is initially applied to charge the battery, and then the current is decreased when the voltage charged in the battery is beyond a predetermined level, thereby controlling the voltage charged in the battery to not be increased any further. Generally, the former period is called a constant current charging mode, and the latter period is called a constant voltage charging mode.

In this conventional battery charging method, the voltage supplied to the battery is measured while the battery is charged, so that the voltage charged in the battery is determined. However, the voltage supplied to the battery is generally different from the voltage actually charged in the battery.

Therefore, in the case of the battery charged according to the conventional charging method, even though it is determined that the battery is fully charged with the supplied power, the battery is likely to be overcharged or not fully charged due to the difference between the supplied voltage and the charging voltage.

When the battery is overcharged, the battery itself may be damaged. Conversely, when the battery is not fully charged, the amount of charging/discharging the battery is wastefully increased, and therefore the life span of the battery is reduced.

Accordingly, it is an aspect of the present invention to provide a method and a system for charging a battery, in which a voltage actually charged in the battery is measured while the battery is charged, so that the battery is stably and fully charged.

### Summary of the invention

The invention is defined by the claims.

### Brief description of the drawings

Embodiments of the present invention will now be described with reference to the accompanying drawings in which:
Figure 1 is a control block diagram of a battery charging system according to an embodiment of the present invention;
Figure 2 is a control flowchart of a battery charging method according to a first embodiment of the present invention;
Figure 3 is a control flowchart of a battery charging method according to a second embodiment of the present invention; and
Figure 4 is a graph illustrating battery voltage, charging current, and charging voltage while a battery is charged in the battery charging system according to an embodiment of the present invention.

In the drawings, like reference numerals refer to like elements throughout.

### Description of the preferred embodiments

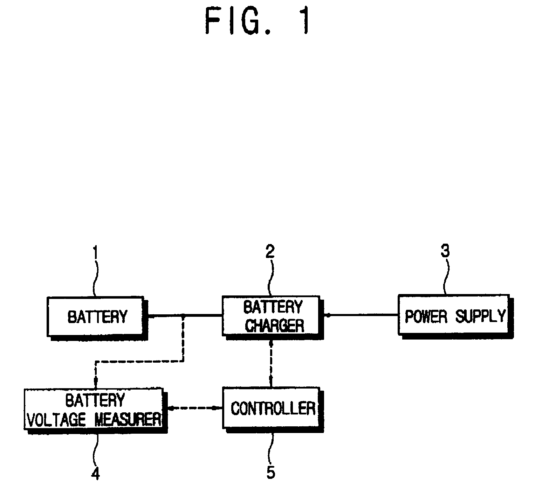

In Figure 1, a battery charging system comprises a battery 1, a power supply 3, a battery charger 2, a battery voltage measurer 4 and a controller 5.

A secondary battery rechargeable by the battery charger 2 is used as the battery 1. For example, the battery 1 includes a rechargeable lithium-ion battery, and other rechargeable secondary batteries.

The power supply 3 supplies power for charging the battery 1 to the battery charger 2. The power supply 3 includes an AC/DC adapter converting commercial AC power into DC power having a predetermined voltage level and transmitting it to the battery charger 2. In addition, the power supply 3 may include a DC/DC adapter using DC power as input power like a cigar lighter socket for vehicles.

The battery charger 2 converts the power supplied from the power supply 3 into a charging voltage for the battery 1, and charges the battery 1 with the charging voltage. Here, the battery charger 2 is controlled by the controller 5 to start or stop charging the battery 1.

The battery voltage measurer 4 is controlled by the controller 5 to measure voltage charged in the battery 1. According to an embodiment of the present invention, the battery voltage measurer 4 measures the voltage applied to a power terminal Vcc of the battery 1 when the battery charger 2 stops charging the battery 1, thereby measuring the voltage actually charged in the battery 1.

The controller 5 controls the battery charger 2 and determines whether the battery 1 is charged fully or not. Further, the controller 5 controls the battery charger 2 to charge the battery 1 on the basis of the measured result of the battery voltage measurer 4.

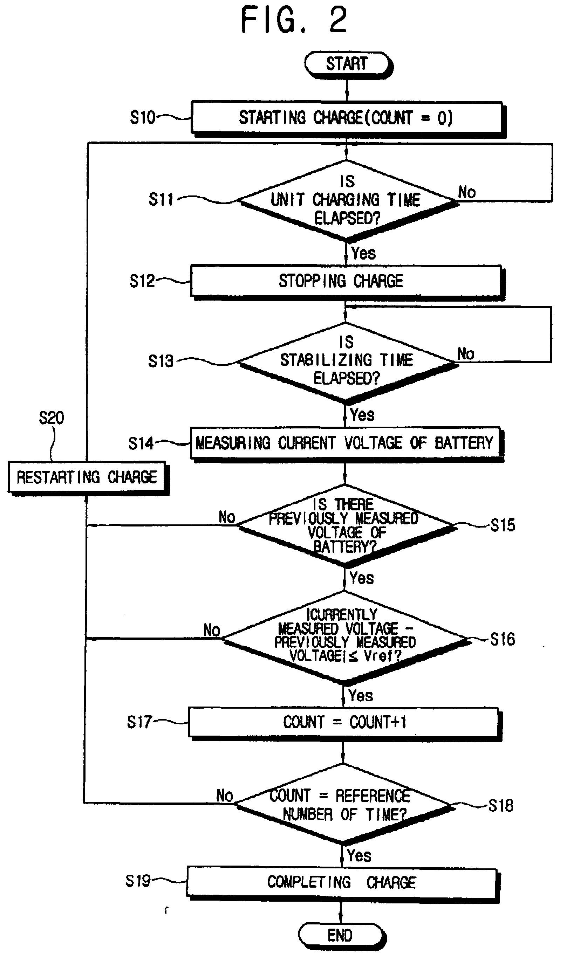

Referring now to Figure 2, first, when the power is supplied from the power supply 3, at operation S10, the controller 5 controls the battery charger 2 to start charging the battery 1. At this operation, the controller 5 initializes a predetermined register value (count) to "0".

Then, at operation S11, the controller 5 determines whether a unit charging time is elapsed after the battery charger 2 starts charging the battery 1. When the unit charging time is elapsed, at operation S12, the controller 5 controls the battery charger 2 to stop charging the battery 1.

Then, at operation S13, the controller 5 determines whether a stabilizing time is elapsed after the battery charger 2 stops charging the battery 1. When the stabilizing time is elapsed, at operation S14, the controller 5 controls the battery voltage measurer 4 to measure the voltage currently charged in the battery 1.

Here, the stabilizing time is used for postponing the measurement of the battery voltage measurer 4 until the remaining power of the charging power supplied from the battery charger 2 to the battery 1 has a minimum effect on the measured voltage charged in the battery 1. Therefore, the battery voltage measurer 4 can measure the voltage of the power charged in the battery 1 more accurately.

Then, at operation S15, the controller 5 checks whether there is a just previously measured voltage. When there is no just previously measured voltage, at operation S20, the controller 5 controls the battery charger 2 to restart charging the battery 1, and performs the operations S11 through S14 again.

On the other hand, when there is a just previously measured voltage, at operation S16, the controller 5 checks whether a voltage difference between the voltage measured at the operation S14 and the just previously measured voltage is within a predetermined reference value, defined by Vref.

The value Vref is "0". That is, the controller 5 checks whether the voltage measured at the operation S14 is equal to the just previously measured voltage.

In the case where the voltage difference between the currently measured voltage of the battery 1 and the just previously measured voltage is within the reference value Vref (e.g., when the reference voltage is "0", that is, when the currently measured voltage of the battery 1 is equal to the just previously measured voltage), at operation S16, the register value (count) is increased by "1".

Then, at operation S18, the controller 5 checks whether the register value (count) is equal to a predetermined reference number. When the register value (count) is not equal to the reference number, at operation S20, the controller 5 controls the battery charger 2 to restart charging the battery 1, and performs the operations S11 through S18 again.

On the other hand, when the register value (count) is equal to the reference number, at operation S19, the controller 5 controls the battery charger 2 to finish charging the battery 1. The reference number may take any suitable value.

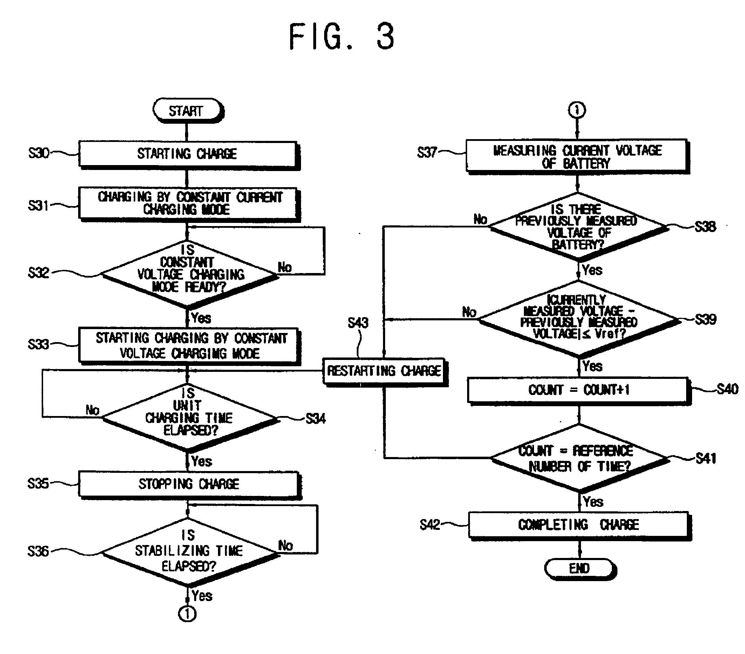

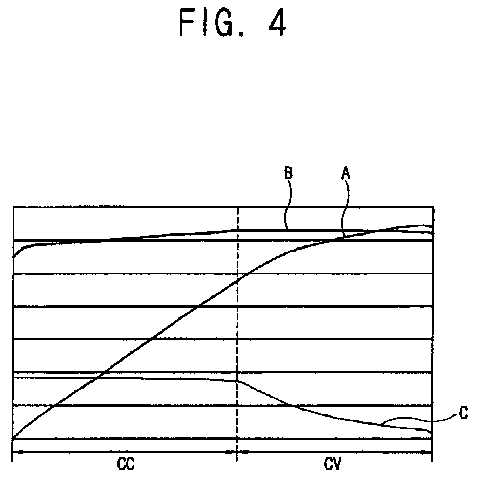

Referring now to Figures 3 and 4, a second embodiment is described. The controller 5 controls the battery charger 2 to charge the battery 1 by a constant current charging mode while the battery 1 is initially charged. Further, when the charged voltage of the battery 1 measured by the battery voltage measurer 4 is beyond a predetermined reference voltage, the controller 5 controls the battery charger 2 to charge the battery 1 by a constant voltage charging mode.

Here, the constant current charging mode means that the battery charger 2 charges the battery 1 with a constant charging current C. That is, as shown in a period of CC in Figure 4, the charging current C supplied from the battery charger 2 to the battery 1 is constant, while a voltage A charged to the battery 1 is increased.

Further, the constant voltage charging mode means that the battery charger 2 charges the battery 1 with a constant charging voltage B. That is, as shown in a period of CV in Figure 4, the charging current C supplied from the battery charger 2 to the battery 1 is gradually decreased, while the charging voltage B supplied to the battery 1 is constant.

Referring to Figure 3, when the power is supplied from the power supply 3, at operation S30, the controller 5 controls the battery charger 2 to start charging the battery 1. At operation S31, the controller 5 controls the battery charger 2 to charge the battery 1 by the constant current charging mode.

At operation S32, the controller 5 determines whether to charge the battery 1 by the constant voltage charging mode or not on the basis of the charged voltage of the battery 1 measured by the battery voltage measurer 4. At this time, the charged voltage measured by the battery voltage measurer 4 may be a voltage measured after stopping charging the battery 1 or a voltage measured while the battery 1 is charged.

When the charged voltage of the battery 1 measured by the battery voltage measurer 4 is beyond the reference voltage, at operation S33, the controller 5 controls the battery charger 2 to charge the battery 1 by the constant voltage charging mode. At this operation S33, the controller 5 initializes a predetermined register value (count) into "0".

Then, at operation S34, the controller 5 determines whether a unit charging time has elapsed after the battery charger 2 starts charging the battery 1 by the constant voltage charging mode. When the unit charging time has elapsed, at operation S35, the controller 5 controls the battery charger 2 to stop charging the battery 1.

Then, at operation S36, the controller 5 determines whether a stabilizing time has elapsed after the battery charger 2 stops charging the battery 1. When the stabilizing time has elapsed, at operation S37, the controller 5 controls the battery voltage measurer 4 to measure the voltage currently charged in the battery 1.

Then, at operation S38, the controller 5 checks whether there is a just previously measured voltage. When there is no just previously measured voltage, at operation S43, the controller 5 controls the battery charger 2 to restart charging the battery 1, and performs the operations S34 through S37 again.

On the other hand, when there is a just previously measured voltage, at operation S39, the controller 5 checks whether voltage difference between the voltage measured at the operation S37 and the just previously measured voltage is within a predetermined reference value Vref.

In the case where, the voltage difference between the currently measured voltage of the battery 1 and the just previously measured voltage is within the reference voltage Vref (e.g., when the reference voltage is "0", that is, when the currently measured voltage of the battery 1 is equal to the just previously measured voltage), at operation S40, the register value (count) is increased by "1".

Then, at operation S41, the controller 5 checks whether the register value (count) is equal to a predetermined reference number. When the register value (count) is not equal to the reference number, at operation S43, the controller 5 controls the battery charger 2 to restart charging the battery 1, and performs the operations S34 through S41 again.

On the other hand, when the register value (count) is equal to the reference number, at operation S42, the controller 5 controls the battery charger 2 to finish charging the battery 1.

Thus, after the battery 1 is charged during the unit charging time, the voltage charged in the battery 1 is measured while the battery 1 is stopped from being charged, thereby correctly measuring the voltage actually charged in the battery 1.

Further, the currently charged voltage measured by the foregoing method is compared with the just previously measured voltage, and thus the battery 1 is stopped from being charged when the voltage difference therebetween is within the reference value Vref by a predetermined number of times. Hence, the battery 1 is fully and stably charged.

As described above, the present invention provides a method and a system for charging a battery, in which voltage actually charged in the battery is measured while the battery is charged, so that the battery is stably and fully charged.

Changes may be made to these embodiments without departing from the invention, the scope of which is defined by the appended claims.

## Claims

1. A method for charging a battery, comprising:
charging the battery for a predetermined unit charging time, then ceasing charging;
after a stabilising time, measuring a charged battery voltage;
determining whether a voltage difference between the currently measured voltage of the battery and a previously measured voltage is within a predetermined range; and
repeating the charging step until the voltage difference is within the range on a predetermined number of occasions.

2. A method for charging a battery, comprising:
(a) stopping a charging of the battery after the battery is charged for a predetermined unit charging time;
(b) measuring a voltage charged in the battery after a lapse of a stabilizing time measured from the stopping of the charging of the battery in (a);
(c) determining whether a voltage difference between the currently measured voltage of the battery and a just previously measured voltage thereof is within a predetermined reference value while (a) and (b) are repeated; and
(d) stopping the charging of the battery after (a), (b), (c) are repeated until the voltage difference is within the reference value by a predetermined number of times.

3. The method according to claim 2, wherein the reference value includes 0.

4. The method according to claim 2 or claim 3, further comprising:
(e) charging the battery by a constant current charging mode; and
(f) charging the battery by a constant voltage charging mode,
wherein (a), (b), (c), (d) are performed while (f) is performed.

5. A system for charging a battery, comprising:
the battery;
a battery charger charging the battery;
a battery voltage measurer measuring a voltage charged in the battery; and
a controller controlling the battery charger to charge the battery on the basis of the measured voltage of the battery voltage measurer,
wherein the controller,
(a) controls the battery charger to stop charging the battery after the battery is charged for a predetermined unit charging time;
(b) controls the battery voltage measurer to measure voltage charged in the battery after a lapse of a stabilizing time from the stopping of the charging of the battery;
(c) determines whether a voltage difference between the voltage of the battery currently measured by the battery voltage measurer and a voltage thereof just previously measured by the battery voltage measurer is within a predetermined reference value while (a) and (b) are repeated; and
(d) stops charging the battery after (a), (b), (c) are repeated until the voltage difference is within the reference value by a predetermined number of times.

6. The system according to claim 5, wherein the reference value includes 0.

7. The system according to claim 5 or claim 6, wherein the controller controls the battery charger to charge the battery using a constant current charging mode while the battery is initially charged, and controls the battery charger to charge the battery using a constant voltage charging mode when the charged voltage of the battery measured by the battery voltage measurer is beyond a predetermined reference voltage, and
(a), (b), (c), (d) are performed while the battery charger charges the battery by the constant voltage charging mode.
